# EUROPEAN PATENT SPECIFICATION

(11) **EP 1 194 734 B1**
(45) Date of publication and mention of the grant of the patent: **26.07.2006**
(21) Application number: 00946618.6
(22) Date of filing: 21.06.2000
(51) Int. Cl.: G01B 11/24, G01B 7/28

(54) **METHOD AND DEVICE FOR LOG MEASUREMENT**
VERFAHREN UND VORRICHTUNG ZUM MESSEN VON RUNDHOLZ
PROCEDE ET DISPOSITIF DE MESURE DES BOIS RONDS

(30) Priority: 23.06.1999 SE 9902422
(43) Date of publication of application: 10.04.2002
(73) Proprietor: Acanova AB, 751 08 Uppsala (SE)
(72) Inventor: LARSOLLE, Anders, S-754 47 Uppsala (SE); WRETBLAD, Per, S-755 92 Uppsala (SE); ANDERSSON, Sven, S-741 92 Uppsala (SE); NYLINDER, Mats, S-756 53 Uppsala (SE); ALNESS, Kenneth, S-751 94 Knivsta (SE)
(74) Representative: Perneborg, Henry T.
(86) International application number: PCT/SE2000/001314
(87) International publication number: WO 2000/079213

(56) References cited:
- WO-A1-89/07749
- SE-B- 391 580
- US-A- 5 023 805
- GRACE L.A.: 'Exploring the potential of using optical log scanners for predicting lumber grade' FOREST PRODUCTS JOURNAL vol. 43, no. 10, October 1993, pages 45 - 50
- ÖHMAN M.: 'Grade Prediction of Pinus sylvestris Logs with the Aid of a Radiograph Image of the Log' SCANDINAVIAN JOURNAL OF FOREST RESEARCH vol. 13, 1998, pages 83 - 89
- OJA J. ET AL: 'Teknisk Rapport / Projektrapport: Timmerinmätningsstöd', 16 March 1999, LULEA TEKNISKA UNIVERSITET, LULEA

## Description

### Field of the invention

The present invention refers to a method for automatic detection of the wood surface of a log. The method is mainly intended to be used in a sorting plant for saw timber with the purpose of measuring dimensions and properties of individual logs in order to make a better classification of the individual logs with respect to selected properties, such as shape and dimension, and thereby maximize the sawyield.

### State of the art

Today both older measuring equipment, which generally relies on shadow registration, and more modern measuring equipment based on laser techniques (see e.g. SE 508718) are used for sorting and measuring logs. A common trait for this measuring systems is that they measure the dimensions of the log on top of the bark, despite the fact that one, from a sawyield point of view, in practice only is interested in the log characteristics, such as dimensions and profile, under the bark. In the last years, the development of equipment for log measurements has therefore also been directed to transradiating techniques, such as X-ray techniques (see e.g. US 5394342 and US 5023805). However, the X-ray technique is inherently very expensive and has not come into practical use.

At present, there are no systems for sorting and measuring separate logs based on image analysis. Since image analysis often is based on operations that detect edges and lines in the picture, it is required that the analyzed object is clean enough for the searched edges and lines to be identifiable. In a sorting plant this prerequisite is often not satisfied, since the end surfaces of the logs often are contaminated with, for example, dirt, snow or colour marks.

### Background of the invention

Existing measuring systems for sorting logs based on their dimensions rely on shadow measurement in one or two directions by a measuring frame, or laser technique. Both types of system measure the outer dimensions of the log with the bark included. For the sorting, the system has then to be provided with information regarding the bark thickness of the log. The bark thickness is estimated by means of a value based on experience and existing data about bark thickness for different sorts of woods. In a sorting plant, one person visually classifies all logs into a number of quality classes, and this person makes a classification of the bark thickness into three different classes. Consequently, for an individual log, the maximum sawyield is not obtained, since the bark thickness varies for individual logs.

The person who makes the classification has an increasing number of qualities to grade, and there is always a demand from the sawmills to increase the log throughput. A higher degree of automatization in the classification stations is therefore desirable because of the subjectivity in the classification, the arduous working condition for the person conducting the classification and the demand for higher rate of log throughput etc.

Image analysis is a technique often used to localize objects in a picture, for instance by means of boundary or edge detection. The present invention utilizes image analysis to detect points on the borderline between the wood and the bark in order to detect the log end profile under the hark, i.e. the wood surface profile. However, a log end may be so contaminated that it is impossible to use image analysis to find a continuous borderline between the wood and the bark around the whole end of the log. The contamination can, for instance, consist of pitch, dirt, blue stains, snow, ice, colour marks etc. The image analyses can also mix-up the boundary between the wood and the bark with other types of lines or edges, such as prominent growth rings.

The shape of the log end varies for individual logs. It is therefore not possible to directly apply industrial applications of image analysis, in which shape and size of the objects are known. It is also not realistic either to position the log ends with same degree of accuracy or to prevent contamination in the same extent as in controlled industrial environments in order to facilitate the image analysis.

The present invention solves the problem above by providing a method and device for determining the wood surface profile of a log end. The claimed method and device are characterized by using an optical image analysis system for determining positions of individual points on the wood surface profile from an optical image of the log end, in combination with at least one further measurement system for determining positions of individual points on the log end, said point position determinations in combination creating an adequate wood surface profile.

The Project Report "Timmerinmätningsstod" by Johan Oja, Olof Broman and Sven-Erik Lindfors (1999:15) reports that an image of the log end can be useful together with other information in order to estimate the quality of a particular log. This other information may, for example, be diameter, length and data from a shadow scanner. Nowhere in this Report is suggested that these data are used to manipulate the image of the log end and it is not even remotedly indicated that such data could be useful to determine the wood surface profile.

The further measurement system works preferably by measuring in points on top of the bark by, for example, a shadow measurement, but also by measurements of points situated on other places, for instance on the wood surface, by X-ray measurements, which combination gives a measuring method with better accuracy than the present systems and with high reliability.

By making the image analysis, whereby the whole wood profile under bark is detected, integrated, synergistic enacts are obtained which makes to method well suited for automated classification of logs.

### Brief description of the drawings

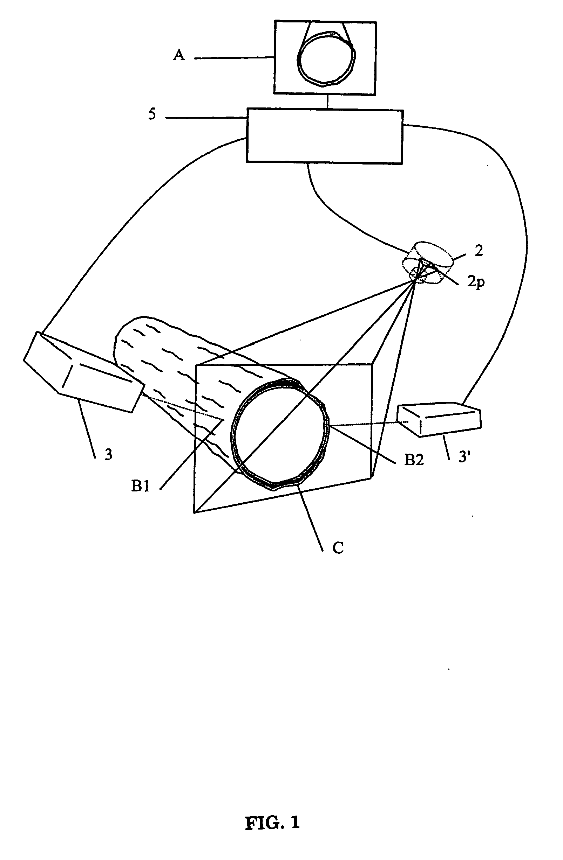

Figure 1 is a schematic view of the parts included in the method according to the invention, in which a log end A is depicted by a imaging sensor 2 and points on top of the bark of the log end are measured by another sensor (3, 3'). The image of the log end and position information for points on the bark of the log end are stored and processed in a computer unit 5.

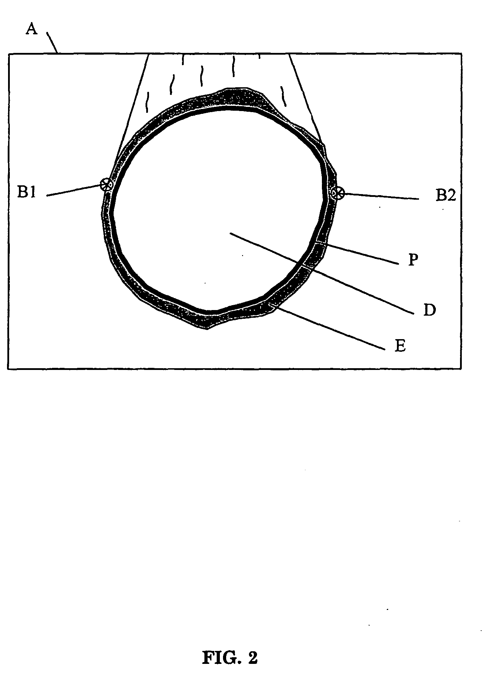

Figure 2 shows an image of the log end A, where position information about the log end on bark have been transformed to the image plane (B1 and B2) in order to detect a wood surface profile P.

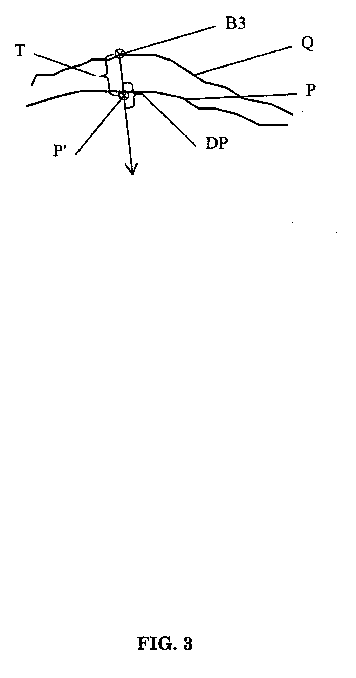

Figure 3 shows a method for integrated image analysis in accordance with the invention, in which a measurement of the position for a point B3 on the bark of the log end together with an experience based value T and a measure of the variation DP are used in order to obtain points that, with a certain probability, are lying on the wood surface profile P.

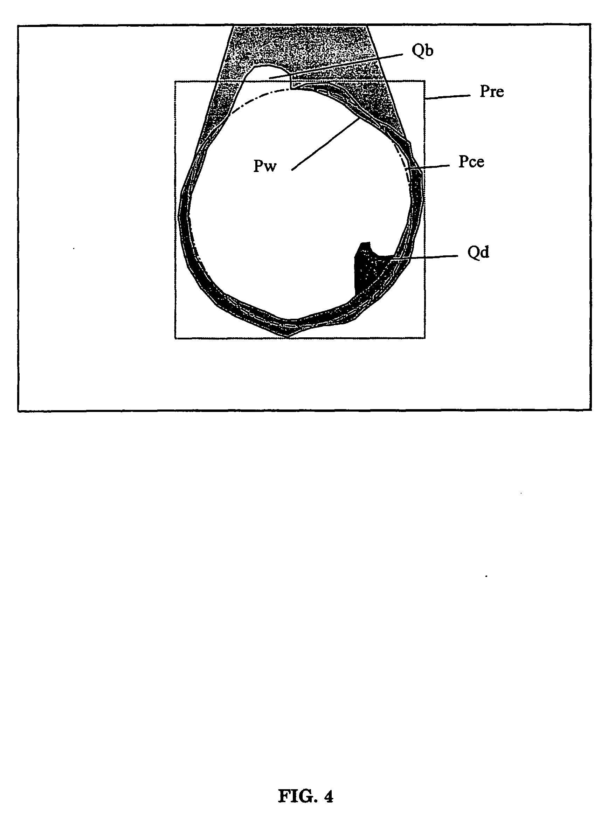

Figure 4 shows a method for integrated image analysis in accordance with the invention, in which an elliptical estimation of the wood surface profile together with an experience based value of the bark thickness are fitted into a rectangle Pre obtained by a two way shadow measurement. The method distinguishes parts of the wood surface profile that are not detectable in the image due to bark scrap Qb and contamination Qd.

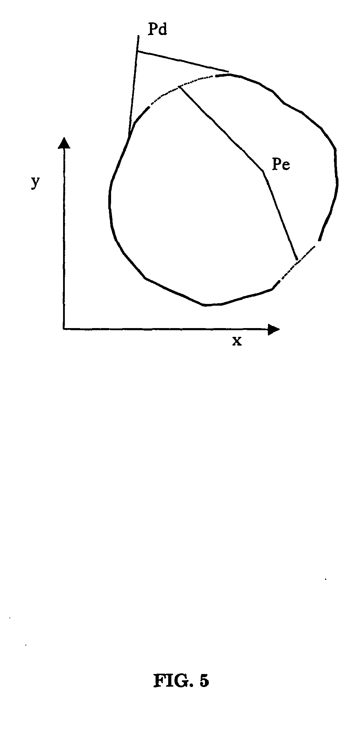

Figure 5 shows a method for integrated image analysis in accordance with the invention, in which the wood surface is accurately detected for the main part of the wood surface profile Pd, while remaining parts Pe are filled in by means of on bark measurements of the log end, experienced based values of the bark thickness and those portions of the remaining parts Pe that actually can be detected.

### Detailed description of the invention

The invention refers to a method for detecting the profile outlining the periphery of the wood surface of a log end by a combination of two measuring systems, where:
S1 is a method for determining positions for points on the bark of a log end profile in order to estimate the shape of the log end and/or its spatial position, and
S2 is an image analysis system, which in an image of a log end surface detects image points on the wood surface profile under the bark.

Techniques in accordance with the system S1 for measurements of the log, on top of or under the bark, can, for example, be one or more of the following:
- shadow measurements,
- 3D-measurements with structured light, such as image analysis, together with illumination of the log with a laser slit,
- distance measurement with a sensor measuring the response from signals, such as visible light, infrared light, radar, microwaves or some other type of electromagnetic radiation, or ultrasound or some other type of acoustic signals, and
- mechanical measurements of the log.

Techniques for creating an image of a log end or a crosscut section of a log in accordance with the image analysis system S2 can, for example, be one or more of the following:
- an imaging sensor, such as a CCD-camera,
- an imaging sensor which is sensitive for visible light, infrared light, thermal infrared or ultraviolet light, or radiation within another part of the electromagnetic spectrum,
- an imaging sensor which can create a monochromatic image of the log end or an image by means of RGB-separation or hyperspectral imaging techniques, and
- a sensor measuring response from signals sent into the log, such as ultrasound or some other acoustic signals, or radar, microwaves, radio waves, or some other type of electromagnetic radiation.

By the term "log end" as used herein is meant a crosscut section including wood and bark (indicated with C in Figure 1). When measuring the dimension of a log, for example the log diameter, in order to estimate the sawyield, one generally measures at, or in close proximity to, that end of the log which is closest to the top of the tree, since this end, in contrast to the root end, will determine the maximum sawyield.

By the term "wood surface" as used herein is meant the part of the log end which consists of wood, i.e. the log end exclusive of the bark.

Referring now to Figure 1, where an image analysis system according to the invention comprises an image-creating sensor 2, such as a video camera, for creating an image A of a log end. The image A is stored and analyzed in a computer unit 5.

The method S1 for determining end surface profiles on bark comprises at least one measuring system for position determination of at least one point on the profile around the end surface 3 on bark.

We now refer to Figure 2. The relation between the two dimensional position in the image and the corresponding spatial position on the log end is given by the camera equation, i.e. through known relations that depend on the optics of the imaging sensor and its position in relation to the log end.

By using the camera equation, positions B1, B2, measured by the system S1 on the bark of the log end, can be projected into positions in the image A.

Consequently, the wood surface profile P can on the one hand be determined in the image by determining points on the wood surface profile mainly by detecting the borderline between the wood and the bark, and on the other hand by calculating the probable position for the wood surface profile P by measurements on bark, which measurements are transformed into the image through the camera equation.

A better estimation of the position of the wood surface profile P can be made if experience based values of the bark thickness are added to the on bark measurements obtained by the method S1.

The way of combining S1 and S2 can be executed by integrating the on bark measurements by S1 with the image analysis S2. This is done by, for each point along the wood surface profile P, using the on bark measurement to calculate the probable position for the wood surface profile P, and use this position in the image analysis S2 to detect the border between the wood and the bark.

In those cases, where the image analysis S2 in combination with on bark measurements S1 are not able to detect the edge between the wood and the bark, because of, for example, contamination or bark scrap at the log end, on bark measurements S1 can, together with experience based values of bark thickness, be used to fill in those segments in the wood surface profile around the log end that are missing in order to obtain a complete wood surface profile.

In those cases, where the image analysis S2 in combination with on bark measurements S1 only detect a portion of the total wood surface profile, which portion is not large enough, or determined with too low probability, for the whole wood surface profile to be determined, on bark measurements S1 together with experience based values of bark thickness can alone be used to estimate the wood surface profile.

This means that the method according to the invention always measures the profile under bark with at least the same accuracy as systems existing today. However, the vast majority of the logs will be measured with higher accuracy.

This reliability is of outermost importance for the development towards a higher degree of automatization in sorting and measuring logs in a sawmill.

A synergetic effect arising from the combination of image analysis S2 and on bark measurements S1 is that the digital analysis can be concentrated into areas in the image which are likely to contain the borderline between wood and bark, i.e. the wood surface profile. This feature drastically reduces the amount of time the computer unit has to spend on the analysis of image points, or makes it possible to use a less powerful processor (and thereby a cheaper one) in the computer unit, and a more thorough image analysis can be done for those image areas which have been identified as possible candidates for the wood surface points.

Taken together, this gives a reliable, flexible system with high resolution for detection and analysis of the dimensions and properties of the under bark lying wood surface of a log end.

The method described above can also be used to detect objects at the log end other than the wood surface profile. Such objects can be naturally occurring objects, such as growth rings, heartwood or the log centre, or defects, such as compression wood, pitch pockets or cracks.

### Examples of preferred embodiments

Referring now to Figure 3, where a point B3, situated on top of the bark at the log end periphery has been measured with the system S1, can be used in the analysis by using its position and direction in an image of the log end. The direction of point situated on an edge is herein defined as the direction toward the interior of the log that is perpendicular to the line outlined by the edge.

By adding an experience based value T of the bark thickness to the point B3 in its direction, a new point P' is obtained. This point P' constitutes a point, which is likely to lie on, or in close proximate to, the wood surface profile. By defining an area DP around the point P' based on information regarding the variation of the bark thickness, an area is obtained, into which the analysis preferably should be concentrated in order to find points lying on the wood surface profile under bark.

By repeating the procedure described above for each point around the log end measured by S1, an integrated procedure is obtained, whereby the total number of points which have to be analyzed by the image analysis system S2 are substantially reduced.

Figure 4 shows a so called shadow measuring device, which is an equipment corresponding to S1 and commonly used for dimension measurements of logs. This device illuminates the log from the side, perpendicularly to the log, in order to estimate its diameter on bark. The device may be used to create a shadow of the log in two directions.

The image of the log may be registered by a video camera mounted at a suitable position along the route of the log in the sawmill, for instance at the classification prior to the sorting.

By means of a two way shadow measuring device it is possible to estimate the size of the log end and, if the conditions so allows, its position by a rectangle Pre in an image of the log end. The probably position in the image for the wood surface profile of the log end, corresponding to P' in Figure 3, can be described as an ellipse Pce which is fitted into the rectangle Pre by means of an experience based value of the bark thickness.

By using the distance from the ellipse Pce to the profile detected by the image analysis system S2, it is possible to find those parts of the profile where the image analysis is unlikely to be able to determine the wood surface profile at the end surface of the log, due to, for instance, bark scrap Qb or contamination Qd on the log end.

We now refer to Figure 5. The result of the analysis is the detected profile Pd of the wood surface under bark. Those parts, which were not detected with enough accuracy by the image analysis, can be estimated by the detected profile Pd and the measurement of the log end profile on bark. By the camera equation, the result is transformed back to the plane of the log end in order to be used in a further analysis of, for example, the shape and dimension of the wood surface.

Although the present invention has been described with reference to specific embodiments, also shown in the appended drawings, it will be apparent for those skilled in the art that many variations and modifications can be done within the scope of the invention as described in the specification and defined in the following claims.

## Claims

1. Method for determining the wood surface profile (P) of a log end (C), **characterized by** using an optical image analysis system (2) for determining positions of individual points on the wood surface profile from an optical image (A) of the log end, in combination with at least one further measurement system (3, 3') for determining positions of individual points on the log end, said point position determinations in combination creating an adequate wood surface profile.

2. Method according to claim 1, **characterized in that** said optical image analysis system (2) creates an image of a log end (A), which image is created by a non-transradiating technique.

3. Method according to claim 1 or 2, **characterized in that** a log end image (C), obtained by said optical image analysis (2), is combined with positions for individual points in the log, whose positions have been obtained with another, under bark measuring system in order to determine the wood surface profile (P).

4. Method according to claim 1 or 2, **characterized in that** a log end image (C), obtained by said optical image analysis (2), is combined with positions for individual points on the log (B1, B2, B3), whose positions have been obtained with another, on bark measuring system (3, 3') in order to determine the wood surface profile (P).

5. Method according to anyone of the claims 1 to 4, **characterized in that** a log end image (A), obtained by said optical image analysis (2), is combined with another log end image obtained with some other measuring method.

6. Method according to anyone of the claims 1 to 5, **characterized in that** a log end profile, obtained by said optical image analysis, is replaced or combined with another log end profile, obtained with some other measuring method, in those areas of the wood surface profile where the wood surface profile obtained by the image analysis is leas accurately determined than the wood surface profile obtained with some other measuring method for the same area.

7. Method according to anyone of the claims 1 to 6, **characterized in that** measurement results, obtained by some other measuring method, are used integrated in the image analysis to determine the wood surface profile.

8. Device for determining the wood surface profile (P) of a log end (C), **characterized by** comprising an optical image analysis system (2) for determining positions of individual points on the wood surface profile from an optical image (A) of the log end, in combination with at least one further measurement system (3, 3') for determining positions of individual points on the log end.

9. Device according to claim 8, **characterized in that** said optical image analysis system (2) comprises a non-transradiating measuring system, which creates an image of the log end (A).

10. Device according to claim 8 or 9, **characterized in that** said another measuring system is an under bark measuring system, which determines positions for individual points in the log.

11. Device according to claim 8 or 9, **characterized in that** said another measuring system (3, 3') is an on bark measuring system, which determines positions (B1, B2, B3) for individual points on the log.

## Patentansprüche

1. Verfahren zur Bestimmung des Holzoberflächenprofils (P) eines Stammendes (C), **gekennzeichnet durch** die Verwendung eines optischen Bildanalysesystems (2) zur Bestimmung von Positionen einzelner Punkte auf dem Holzoberflächenprofil aus einem optischen Bild (A) des Stammendes in Verbindung mit zumindest einem weiteren Messsystem (3, 3') zur Bestimmung von Positionen einzelner Punkte auf dem Stammende, wobei die Punktpositionsbestimmungen in Kombination ein geeignetes Holzoberflächenprofil erzeugen.

2. Verfahren nach Anspruch 1, **dadurch gekennzeichnet, dass** das optische Bildanalysesystem (2) ein Bild eines Stammendes (A) erzeugt, wobei das Bild durch eine Nicht-Durchleuchtungstechnik erzeugt wird.

3. Verfahren nach Anspruch 1 oder 2, **dadurch gekennzeichnet, dass** ein durch die optische Bildanalyse (2) erhaltenes Stammendebild (C) mit Positionen einzelner Punkte in dem Stamm kombiniert wird, deren Positionen mit einem anderen, Unter-Rinden-Messsystem zur Bestimmung des Holzoberflächenprofils (P) erhalten wurden.

4. Verfahren nach Anspruch 1 oder 2, **dadurch gekennzeichnet, dass** ein durch die optische Bildanalyse (2) erhaltenes Stammendebild (C) mit Positionen einzelner Punkte auf dem Stamm (B1, B2, B3) kombiniert wird, deren Positionen mit einem anderen, Rindenoberflächenmesssystem (3, 3') zur Bestimmung des Holzoberflächenprofils (P) erhalten wurden.

5. Verfahren nach einem der Ansprüche 1 bis 4, **dadurch gekennzeichnet, dass** ein durch die optische Bildanalyse (2) erhaltenes Stammendebild (A) mit einem anderen Stammendebild kombiniert wird, das mit einem anderen Messverfahren erhalten wurde.

6. Verfahren nach einem der Ansprüche der 1 bis 5, **dadurch gekennzeichnet, dass** ein durch die optische Bildanalyse erhaltenes Stammendeprofil durch ein anderes Stammendeprofil ersetzt oder damit kombiniert wird, das mit einem anderen Messverfahren in den Bereichen des Holzoberflächenprofils erhalten wurde, wo das durch die Bildanalyse erhaltene Holzoberflächenprofil weniger genau bestimmt ist als das Holzoberflächenprofil, das durch ein anderes Messverfahren für den gleichen Bereich erhalten wurde.

7. Verfahren nach einem der Ansprüche 1 bis 6, **dadurch gekennzeichnet, dass** die durch ein anderes Messverfahren erhaltenen Messergebnisse in der Bildanalyse integriert verwendet werden, um das Holzoberflächenprofil zu bestimmen.

8. Vorrichtung zur Bestimmung des Holzoberflächenprofils (P) eines Stammendes (C), **gekennzeichnet durch** ein optisches Bildanalysesystem (2) zur Bestimmung von Positionen einzelner Punkte auf dem Holzoberflächenprofil aus einem optischen Bild (A) des Stammendes in Kombination mit zumindest einem weiteren Messsystem (3, 3') zur Bestimmung von Positionen einzelner Punkte auf dem Stammende.

9. Vorrichtung nach Anspruch 8, **dadurch gekennzeichnet, dass** das optische Bildanalysesystem (2) ein Nicht-Durchleuchtungsmesssystem umfasst, das ein Bild des Stammendes (A) erzeugt.

10. Vorrichtung nach Anspruch 8 oder 9, **dadurch gekennzeichnet, dass** das andere Messsystem ein Unter-Rinden-Messsystem ist, das die Positionen für einzelne Punkte in dem Stamm bestimmt.

11. Vorrichtung nach Anspruch 8 oder 9, **dadurch gekennzeichnet, dass** das andere Messsystem (3, 3') ein Rindenoberflächenmesssystem ist, das die Positionen (B1, B2, B3) für einzelne Punkte auf dem Stamm bestimmt.

## Revendications

1. Procédé destiné à déterminer le profil superficiel du bois (P) d'une extrémité (C) de rondin, **caractérisé en ce qu'**il comprend l'étape consistant à utiliser un système d'analyse (2) d'image optique destiné à déterminer des positions de points individuels sur le profil superficiel du bois à partir d'une image optique (A) de l'extrémité de rondin, en combinaison avec au moins un système de mesure supplémentaire (3, 3') destiné à déterminer des positions de points individuels sur l'extrémité de rondin, lesdites déterminations combinées de position de point créant un profil superficiel adéquat du bois.

2. Procédé selon la revendication 1, **caractérisé en ce que** ledit système d'analyse (2) d'image optique créé une image d'une extrémité (A) de rondin, laquelle image est créée au moyen d'une technique de rayonnement non transversal.

3. Procédé selon la revendication 1 ou 2, **caractérisé en ce qu'**une image (C) d'extrémité de rondin, obtenue au moyen dudit système d'analyse (2) d'image optique, est combinée à des positions de points individuels dans le rondin, lesquelles positions ont été obtenues au moyen d'un autre système de mesure sous écorce afin de déterminer le profil superficiel du bois (P).

4. Procédé selon la revendication 1 ou 2, **caractérisé en ce qu'**une image (C) d'extrémité de rondin, obtenue au moyen dudit système d'analyse (2) d'image optique, est combinée à des positions de points individuels sur le rondin (B1, B2, B3), lesquelles positions ont été obtenues au moyen d'un autre système de mesure sur écorce (3, 3') afin de déterminer le profil superficiel du bois (P).

5. Procédé selon l'une quelconque des revendications 1 à 4, **caractérisé en ce qu'**une image (A) d'extrémité de rondin, obtenue au moyen dudit système d'analyse (2) d'image optique, est combinée à une autre image d'extrémité de rondin obtenue au moyen d'un autre procédé de mesure.

6. Procédé selon l'une quelconque des revendications 1 à 5, **caractérisé en ce qu'**un profil d'extrémité de rondin, obtenu au moyen dudit système d'analyse d'image optique, est remplacé ou combiné à un autre profil d'extrémité de rondin obtenu au moyen d'un autre procédé de mesure quelconque, dans ces zones du profil superficiel du bois où le profil superficiel du bois obtenu au moyen de l'analyse d'image est déterminé de manière moins précise que le profil superficiel du bois obtenu au moyen d'un autre procédé de mesure quelconque pour la même zone.

7. Procédé selon l'une quelconque des revendications 1 à 6, **caractérisé en ce que** les résultats de mesure, obtenus au moyen un autre procédé de mesure quelconque, sont utilisés de manière intégrée à l'analyse d'image pour déterminer le profil superficiel du bois.

8. Dispositif destiné à déterminer le profil superficiel du bois (P) d'une extrémité (C) de rondin, **caractérisé en ce qu'**il comprend un système d'analyse (2) d'image optique destiné à déterminer des positions de points individuels sur le profil superficiel du bois à partir d'une image optique (A) de l'extrémité de rondin, en combinaison avec au moins un système de mesure supplémentaire (3, 3') destiné à déterminer des positions de points individuels sur l'extrémité de rondin.

9. Dispositif selon la revendication 8, **caractérisé en ce que** ledit système d'analyse (2) d'image optique comprend un système de mesure à rayonnement non transversal qui créé une image de l'extrémité (A) de rondin.

10. Dispositif selon la revendication 8 ou 9, **caractérisé en ce que** ledit autre système de mesure est un système de mesure sous écorce, qui détermine des positions de points individuels dans le rondin.

11. Dispositif selon la revendication 8 ou 9, **caractérisé en ce que** ledit autre système de mesure (3, 3') est un système de mesure sur écorce, qui détermine des positions (B1, B2, B3) de points individuels sur le rondin.
